# EUROPEAN PATENT SPECIFICATION

(11) **EP 1 626 211 B1**
(45) Date of publication and mention of the grant of the patent: **12.12.2007**
(21) Application number: 05107328.6
(22) Date of filing: 09.08.2005
(51) Int. Cl.: F16J 15/44

(54) **Sealing system assembly**
Dichtungssystem
Assemblage d'une garniture d'étancheité

(30) Priority: 11.08.2004 IT TO20040565
(43) Date of publication of application: 15.02.2006
(73) Proprietor: ANSALDO ENERGIA S.P.A., 16152 Genova (IT)
(72) Inventor: Garello, Roberto, 16132 Genova (IT); Lari, Roberto, 16145 Genova (IT)
(74) Representative: Jorio, Paolo

(56) References cited:
- EP-A- 0 989 341
- WO-A-01/09536
- WO-A-20/04044465
- GB-A- 2 133 482
- US-A- 4 486 024
- US-A- 6 082 740
- US-B1- 6 431 550

## Description

This invention relates to a device and method for the assembly of a sealing system for a rotary machine cooled via a gaseous medium, which sealing system may be placed between the casing and the revolving shaft of the rotary machine; in particular, the invention relates to a device and method for assembly of a sealing system on a hydrogen-cooled alternator, the sealing system being in use carried by an internal supporting element of the casing. Lastly, the invention also relates to a sealing system which may be assembled using said device and method, particularly compact and efficient. Such a seal is known from document EP-A-1 571 380.

Here and below, the term "rotary machine" refers to any machine, whether a generating or operating machine, including a rotor carried by a shaft, rotating in a fluid cooling medium and enclosed in a seal box, with the rotating shaft supported by supporting elements (bearings) inside or outside the casing.

The alternators are cooled by a gaseous medium, in certain cases hydrogen; it is therefore clear that confinement of the gaseous cooling medium inside the machine casing must be guaranteed.

This is achieved through complex sealing systems, called "hydrogen seals", which may be placed between the part of the casing housing the active part of the machine rotor and the revolving shaft of the machine, which supports the active part of the rotor.

These sealing systems are installed in the passages through which the ends of the shaft protrude from the casing, or part of the casing, which is flooded with the gaseous cooling medium, in order to be supported by the bearings.

The sealing system for gaseous medium, created by placing pressurised oil inside a seal box which includes a series of ring-shaped sliding sealing elements supported in contact with the shaft, must, on the one hand, prevent passage of the oil towards the rotor and, on the other, prevent leakage of the pressurised hydrogen. For this purpose, the known sealing systems include a sealing element for the oil, which is positioned on the part of the shaft adjacent to the rotor, the aforementioned seal box for the gaseous cooling medium, including a rear element and a closing ring, between which the aforementioned sliding seal elements, which cooperate with the shaft, and an intermediate ring supporting the seal box, are pack tight; all these elements are then supported by an internal supporting element of the casing, known as a "shield".

Here and below, the terms "rear" and "front" are intended as referring to elements or parts of elements which, during use, face, respectively, towards the inside and the outside of the casing, with reference to the direction defined by the axis of the machine shaft.

The aforementioned elements of the sealing system may be assembled in an axial sequence, with the seal box assembled externally with respect to the inside of the machine (or assembled in front of the other elements forming the seal); they may also be assembled "packed", with the seal box positioned adjacent to the sealing element for the oil and inside a ring-shaped space between the shaft and the shield, and with the intermediate ring positioned in front of everything, attached to the shield radially on the outside and to the seal box radially on the inside.

The first type of sealing system is relatively bulky in an axial sense and requires extension of the generator shaft on both sides, with consequent dimensions, which have repercussions on the machine itself (generator), on the entire power plant and, in particular, on the foundations, with consequent increases in costs.

The second type of sealing system is much less bulky in an axial sense, but is difficult to assemble, since the seal box must be assembled in a limited and difficult to reach space; assembly takes place, in fact, with the machine only partially disassembled, in the case in question without the bearings and with the shaft supported from below with a removable support. Therefore, the dimensions of the components of the sealing system are smaller than in the previous case, making them lighter and easier to handle. However, the reduction in weight, rigidity and dimensions of the components means the sealing system is able to support only lower hydrogen pressures than the previous system; therefore, the cooling efficiency obtainable using this system is lower, with repercussions on the dimensions of the alternator and/or on the power it generates.

It is therefore clear that a need exists for a sealing system which is both reduced in axial size and capable of supporting high pressures of the gaseous cooling medium; this could generally be obtained by creating the elements forming the second type of sealing system described above with the same dimensions and weights as those forming the first type of sealing system previously described; however, these components would be difficult or impossible to assemble.

The object of this invention is providing a device and method for assembly of a sealing system of the second type described above, which allow easy, rapid and reliable assembly, even in cases where the elements forming the sealing system have dimensions, weights and rigidity sufficient to support relatively high pressures of the gaseous cooling medium.

On the basis of the invention it is therefore provided an assembly device for a sealing system of a rotary machine cooled by a gaseous medium, in particular a hydrogen-cooled alternator, according to what is defined in claim 1,.

The invention also relates to an assembly method for the aforementioned sealing system, as defined in claim 9.

Lastly, the invention relates to a compact sealing system for a rotary machine cooled by a gaseous medium, as defined in claim 10.

The assembly device of the invention includes a first and a second half-ring, which may be circumferentially coupled together to form a ring-shaped assembly support, including a sleeve portion which may be coupled to slide with the machine shaft and a flange portion which may be coupled with a rear element of the seal box; the assembly device is then completed by a spacer half-ring, which has a first end with an internal diameter greater than the diameter of the shaft and a collar for coaxial coupling with the sealing element for the oil, and a second end equipped with a flange which may be coupled in contact with the sleeve portion of the assembly support.

In this manner, if the elements forming the sealing system are each divided into at least two sectors of preset angular extension which may be coupled together circumferentially, it is possible to assemble in succession all the elements forming the sealing system, using a C-shaped lifting arm, passing over the shaft, in the traditional manner, using the half-rings of the assembly device as supports.

In particular, assembly is carried out resting on the shaft and inside the casing, near the shield, by passing over the first half-ring with the C-shaped lifting arm, rotation of the first half-ring downwards, using the shaft as a guide, assembly resting on the shaft, in a manner similar to the previous one, of the second half-ring, and circumferential clamping together of the first and second half-rings, to form a ring-shaped assembly support, which is therefore supported by the shaft near the shield; the spacer half-ring is then head-to-head assembled against a front side of a first sector of the sealing element for the oil (oil sealing element).

Subsequently, using the C-shaped lifting arm, the first sector of the oil sealing element is assembled in position, by attaching the spacer half-ring resting on a sleeve portion of the ring-shaped assembly support obtained by joining together the first and second half-rings, then rotating the spacer half-ring downwards through a 180° rotation of the assembly support; this frees space to allow assembly in position of a second sector of the oil sealing element as well, which may then be assembled and attached to the shield, whilst it is supported by the assembly support formed by the first and second half-rings and by the spacer half-ring.

This latter element is then removed and assembly of all the remaining elements forming the sealing system continues in an identical manner, sector by sector, always using the C-shaped lifting arm and rotating downwards the first sector of each element of the sealing system being assembled, using the ring-shaped assembly support created by coupling together the first and second half-rings.

At the end, the ring-shaped assembly support will support, on the shaft, the entire seal box already assembled on the intermediate ring and positioned facing the shield; with a simple axial translation of the assembly support on the shaft, it will therefore be possible to bring the intermediate ring up to strike against the shield, thereby allowing attachment of the seal box to the shield; subsequently, the ring-shaped assembly support created by the first and second half-rings is disassembled and the half-rings are removed using the C-shaped lifting arm.

Further objects and advantages of the invention will appear clear from the description which follows of a non-limitative embodiment example, supplied purely by way of example and with reference to the figures in the attached drawings, in which:
- figure 1 shows a three-quarters front perspective view, with parts removed for greater clarity, of a detail of a rotary machine, in particular an alternator, including a revolving shaft partially housed in a casing which may be provided with gas-proof sealing using the sealing system of the invention, of which the first stage of assembly is shown;
- figure 2 shows the same detail shown in figure 1 on an enlarged scale, with the sealing system of the invention installed;
- figures 3 to 7 show respective perspective views (figures 3 and 6) and right-angled projection (figures 4 and 7) of the half-rings forming the assembly device of the invention, figure 5 being a cross-section, according to a V-V trace plan of figure 4;
- figures 8 to 1 14 show respective perspective views of the same detail in figure 1 on an enlarged scale, during the subsequent stages of assembly of the sealing system in figure 2, according to the method of the invention.

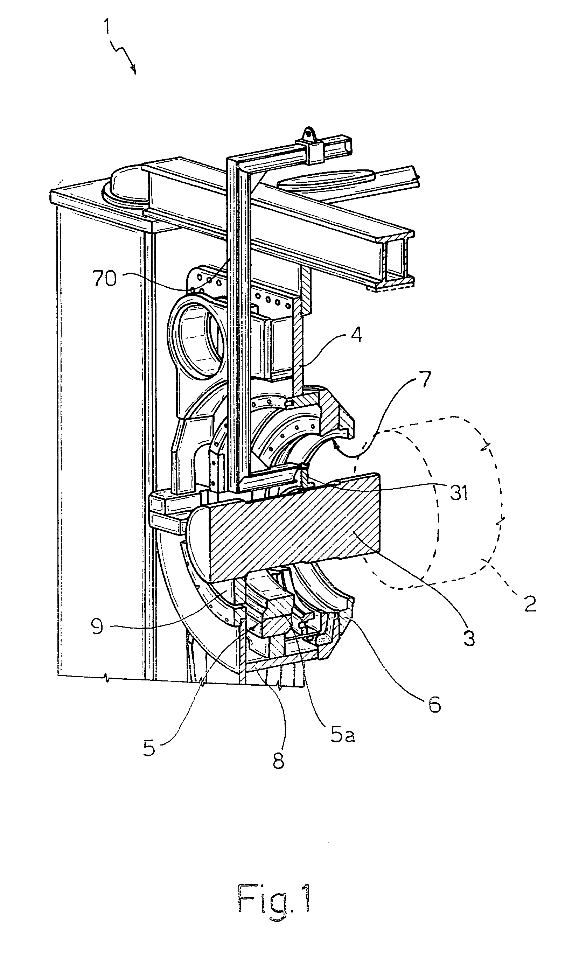

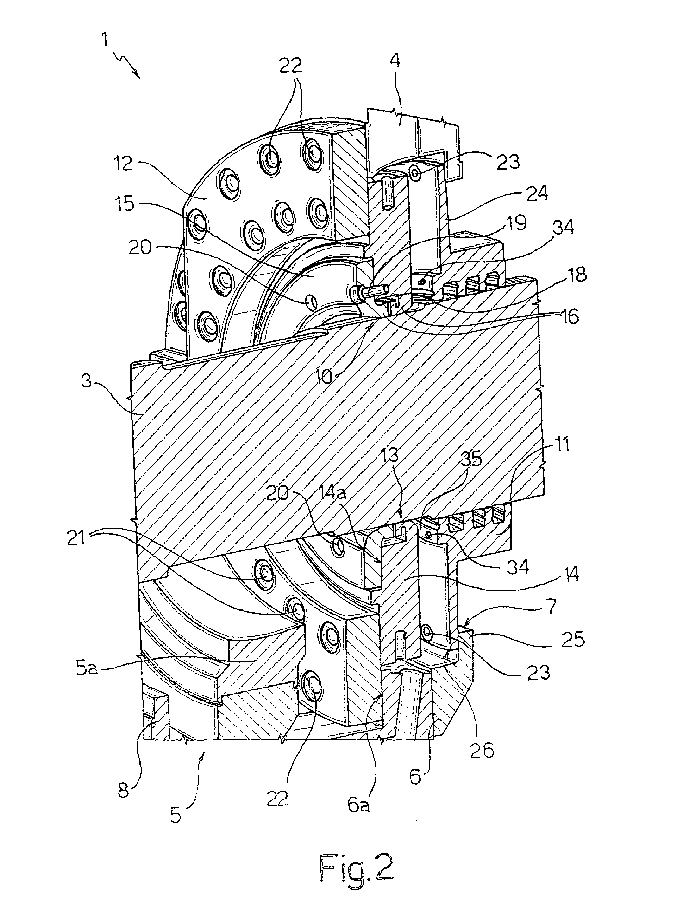

Figures 1 and 2 show a rotary machine 1, to be cooled during use with a gaseous medium, in this case an alternator, in which the active part of the rotor 2 (shown only as a broken line), which is supported by a shaft 3, is cooled by hydrogen, which floods the inside of a casing 4 containing the gaseous cooling medium and housing rotor 2.

Revolving shaft 3 is supported at each end (only one of which is shown in figure 1) by an oil bearing 5 (e.g. a hydrodynamic one), which is shown partially disassembled, so only a lower sector of an external ring 5a is visible; shaft 3 projects from casing 4 and towards bearing 5 through a circular passage 7, bordered radially on the outside by casing 4 and, on the rear side, or towards the inside of casing 4 and the relative rotor 2, by an internal supporting element 6 of casing 4, known to experts in the field as a "shield"; for brevity's sake, this internal supporting element 6 of casing 4 is always referred to as a shield in the description which follows.

In the case illustrated, bearing 5 is supported, in passage 7, but outside casing 4, by a known structure 8, integral with casing 4; with bearing 5 disassembled, shaft 3 is supported (not revolving) by a supporting element 9 below it only, which is inserted between shaft 3 and structure 8.

In a space defined by passage 7 (figure 2), a sealing system 10 is installed between casing 4 and shaft 3, suitable, during use, both for preventing leaking of the gas from casing 4 and preventing entry of oil into casing 4.

Sealing system 10 includes a range of components positioned in a preset sequence within casing 4, in the case in question formed of a first sealing element 11, striking shield 6 during use and positioned towards an internal side of casing 4, an intermediate ring 12 connected during use with shield 6, but positioned towards an external side of casing 4, and a seal box 13 for the gaseous medium, which floods the inside of casing 4 during use, supported by intermediate ring 12 and positioned during use radially within shield 6, which is cup-shaped and the concave part of which is turned forwards towards bearing 5, or towards the outside of casing 4.

Seal box 13, in turn, includes a rear element 14, also cup-shaped, a closing ring 15, in front, and a group of sealing rings 16 sliding on shaft 3, assembled housed in a ring-shaped space 18 inside element 14, pack-tight between this and closing ring 15. This may be attached to rear element 14 via a set of screws 19, which may be housed in a set of corresponding holes 20, positioned in a crown on a front side 14a of element 14 and through ring 15.

Seal box 13 is attached on the rear side (or towards the inside of casing 4) of intermediate ring 12 via means of connection (e.g. screws) which are not illustrated and may be positioned through a crown of through holes 21 on intermediate ring 12. The latter may, in turn, be attached, during use, to strike against a front side 6a of shield 6, through a second crown of holes 22.

During use, pressured oil is supplied inside seal box 13 (in space 18) using a known method, which lubricates rings 16 and is then discharged, in a method known to the state-of-the-art, through a passage made below in structure 8, towards bearing 5.

Sealing element 11, of a generally known type as a whole, is joined, through means of connection 23, which may be connected through a flange portion 24, to a rear edge 25 of shield 6, striking a front surface 26 of it, and cooperates during use with shaft 3.

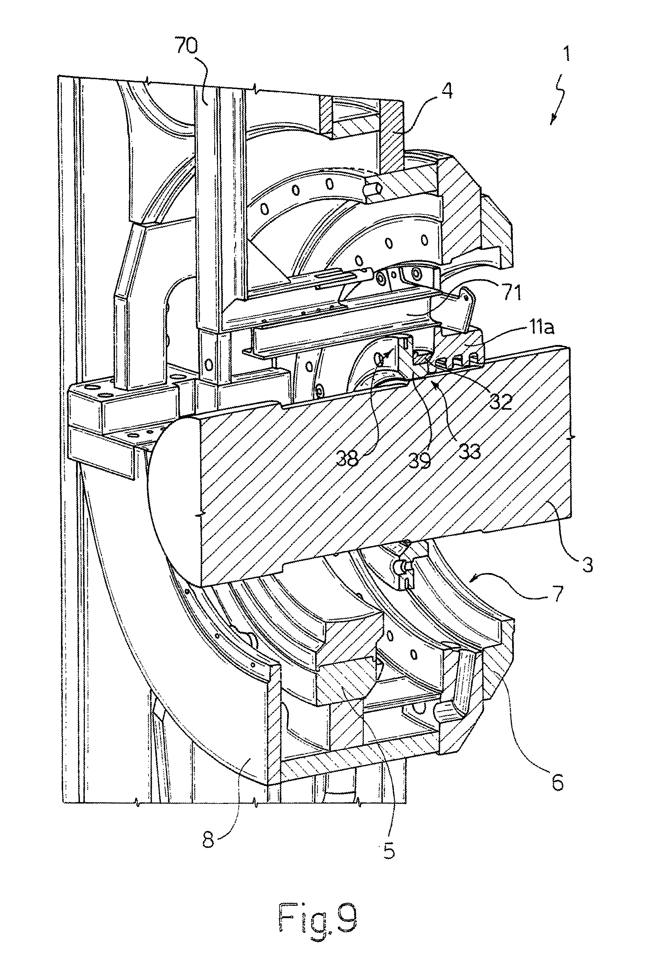

According to a first aspect of the invention, intermediate ring 12 and seal box 13 are sized to achieve relatively high pressures of the gaseous cooling medium inside casing 4 (equal to at least 6 bar of absolute pressure), comparable to those with sealing systems which have a seal box positioned on the outside of the casing and, therefore, outside passage 7; in addition to this, sealing element 11, as well as intermediate ring 12 and seal box 13, are formed to allow them to be selectively coupled, as will be described below, with elements 30,31 and 32 of an assembly device 33, which is visible in its entirety only in figure 9.

In particular, sealing element 11 has special assembly holes 34 expressly frontly provided in a crown arrangement, on the side turned towards seal box 13, on a radially internal edge 35 of sealing element 11.

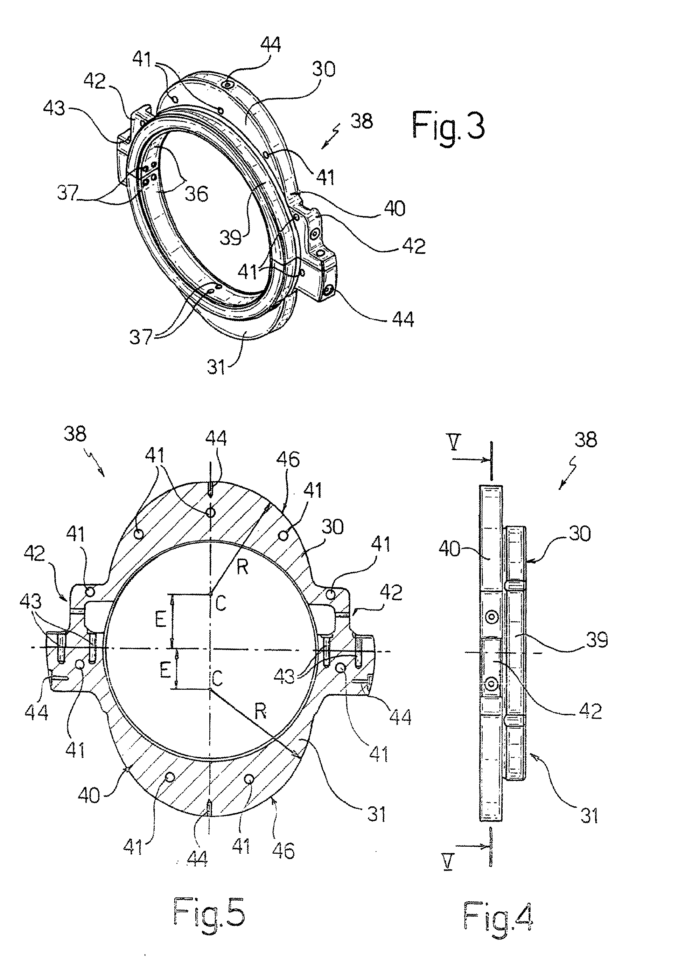

With reference to figures 3 to 7 and 9, according to the invention, assembly device 33 includes a first half-ring 30 and a second half-ring 31, which may be coupled together circumferentially to form a ring-shaped assembly support 38 (hereinafter also referred to, for brevity's sake, as "equipped ring"), with a sleeve portion which may be coupled sliding, during use, with shaft 3, via one of its cylindrical internal side surfaces, preferably covered with sectors 36 (figure 3), which are coupled sliding with shaft 3, manufactured in friction-proof material and anchored radially on the inside of half-rings 30,31, across their entire angular extension, through means of connection 37.

From a front end (in the sense that, during use, it is turned towards the outside of casing 4) of sleeve portion 39, a flange portion 40 projects in cantilever fashion; flange portion 40 may be coupled, during use, as will be seen, with the rear element 14 of seal box 13.

In corespondence with flange portion 40, half-rings 30,31 bear through holes 41 turned axially (therefore parallel during use with shaft 3) and positioned in a crown arrangement around a single circumference with a radius sufficient to allow them to be coupled with front holes 20 on rear element 14 of seal box 13, designed to receive attachment screws 19 for closing ring 15.

Holes 41 are also made through respective ear-shaped parts 42 of flange portion 40, which have respective holes 43 turned circumferentially to allow reciprocal attachment of half-rings 30,31, to form equipped ring 34. Half-rings 30 and 31 also have a set of radial threaded holes 44, in appropriate positions perpendicular to each other, preferably in correspondence with the edge of flange portion 40 and basically spaced at intervals of 90°, which serve for removable attachment of a raising eyebolt (known to the state-of-the-art and not shown).

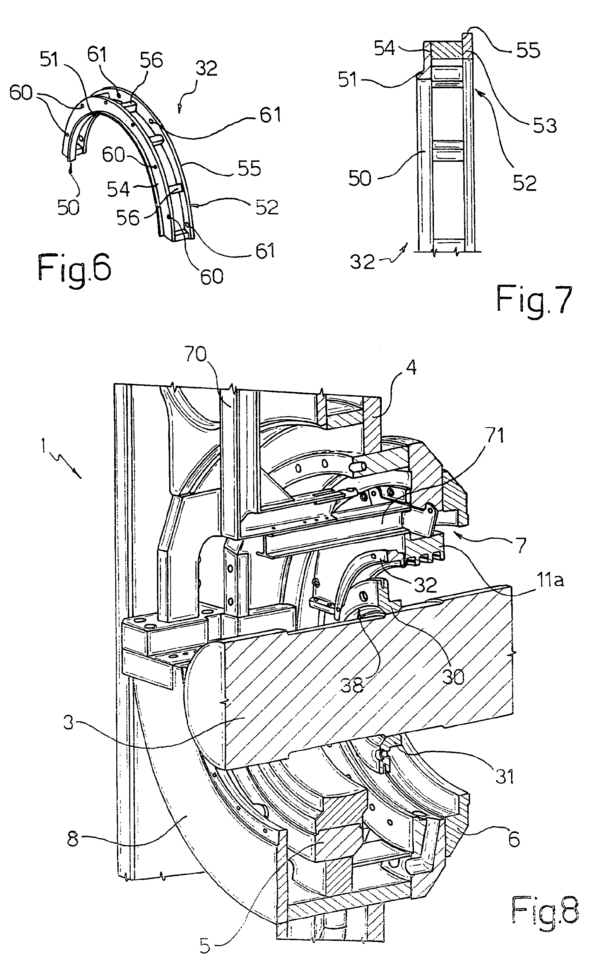

In the radial cross-section (figure 5), flange portion 40 has an oblong radially external profile, defined by opposing circumferences 46, with radius R basically identical to the internal diameter of ring-shaped space 18 of rear element 14 of seal box 13.

Here and below, the term "basically" is intended to mean that the diameters and relative operating tolerances of the elements which are coupled are chosen in a manner to create a mobile, basic shaft or basic hole, coupling (e.g. h7/G8) or uncertain (e.g. h7/H8) basic shaft or hole coupling.

According to an aspect of the invention, curving centre C of circumferences 46 is translated radially outwards, with respect to the axis of symmetry of half-rings 30,31 (coinciding, during use, with the axis of rotation of shaft 3), of a preset eccentricity E, for example equal to about half of radius R. More generally, the value of eccentricity E is determined in the manner described further on.

Device 33 also includes a spacer half-ring 32 (figures 6 and 7), which has a first end 50 with an internal diameter greater than the maximum external diameter of shaft 3 and a collar 51 with an external diameter basically equal to the internal diameter of edge 35 of sealing element 11, in a manner to allow collar 51 to couple axially with sealing element 11 during use.

Half-ring 32 also has a second end 52 equipped with a flange 53 which may be made contact-coupling, by means of its own radially internal edge, with sleeve portion 39 of assembly support (equipped ring) 38, on the outside thereof.

On the basis of what has been described so far, sleeve portion 39 of equipped ring 38 has an internal diameter basically equal to the external diameter of shaft 3 and an external diameter basically equal to the internal diameter of flange 53.

Each half-ring 30,31 and 32 defines a ring-shaped sector of basically 180°. Spacer half-ring 32 is also preferably formed of two ring-shaped crown sectors 54 and 55, coupled coaxially and integral with each other through a group of longitudinal ribs 56; ring-shaped crown sector 54 is L-shaped in the radial cross-section (figure 7), in order for its radially internal edge to define collar 51 for coupling with sealing element 11, whereas ring-shaped crown sector 55 has a rectangular cross-section and defines flange 53.

Both ring-shaped crown sectors 54 and 55 have a circle of through holes 60 and 61, turned axially; holes 60 are, in particular, in angular positions corresponding with those of front blind holes 34 of edge 35 of sealing element 11, and serve to receive the respective connection elements through them (e.g. screws), which are not illustrated and may be screwed into holes 34. This allows temporary but integral attachment during use, as will be explained, of sealing element 11 to half-ring 32.

Vice versa, holes 61 are in angular positions corresponding with those of holes 41 of half-rings 30 and 31 and are made through flange 53 at angular intervals between ribs 56, in order to receive suitable means of connection (not illustrated, such as screws for example), for temporary but integral attachment during use, as will be explained, of spacer half-ring 32 to equipped ring 38.

According to a last aspect of the invention, assembly of sealing system 10 in passage 11, through use of assembly device 33, is achieved using the following method.

In the first place, each principal component 11, 12 and 14 of sealing system 10 is divided into at least two sectors of preset angular extension (e.g. into two halves with angular extension equal to 180°, similar to half-rings 30,31).

In the second place, assembly of sealing system 10 is performed in sequence, with bearing 5 dismantled (or rather with rotary machine 1 in the configuration shown in figure 1), for insertion from the outside of casing 4 of a first sector of each component to be assembled inside casing 4, passing over shaft 3 and support 9 (passing underneath would be impossible, due to the presence of support 9 for shaft 3), rotation downwards of the first sector just inserted of each component and insertion of the second sector (and the subsequent ones, if the component is divided into more than two sectors) of the same component, with subsequent reciprocal circumferential attachment of the various sectors of the same component with each other. Insertion over the top via passage 11 is performed in a known way, using a C-shaped lifting arm 70 (figure 1), known in itself, possibly equipped with an extension 71 (figures 8 and 9).

In greater detail, and referring to figures 1 and 8 to 14 (where the details already described are indicated with the same reference numbers and where each figure only shows the details relating to the phase of the assembly method shown in that figure), the method is as follows.

To start with (figure 1), assembly resting on shaft 1 and through passage 7 is carried out, via passing over the top (of shaft 3 itself and the relative support 9), using C-shaped lifting arm 70, of half-ring 31, placing it in the position shown in figure 1; subsequently, lifting arm 70 is removed and, manually or through cables passed through eyebolts (not shown), which are fixed in holes 44, half-ring 31 is rotated downwards through 180°, using shaft 3 as a guide, sliding friction-proof sectors 36 along its external surface, after which half-ring 30 is assembled resting on shaft 3, again by passing over the top with C-shaped lifting arm 70, in the angular space left empty by rotation downwards of half-ring 31; half-rings 30 and 31 are then attached circumferentially (via holes 43) to form equipped ring 38, which is therefore carried idle and coaxial by shaft 3 (figure 8).

At this point, head to head assembly is performed against a front side (in the sense that it is turned towards the outside of casing 4 during use) of a first sector 11a of rear sealing element 11 for the oil of spacer half-ring 32, using screws which are coupled in holes 60 and 34 and using collar 51 to guide onto half-ring 32 the portion of edge 35 of sector 11a of the sealing element. Immediately after, again using lifting arm 70, this time equipped with extension 71, assembly is performed on sleeve portion 39 of equipped ring 38 of the complex assembled, formed by sector 11a of sealing element 11 and by spacer half-ring 32, by passing over (figure 8) shaft 3 and equipped ring 38, previously assembled on shaft 3, obtaining the configuration shown in figure 9.

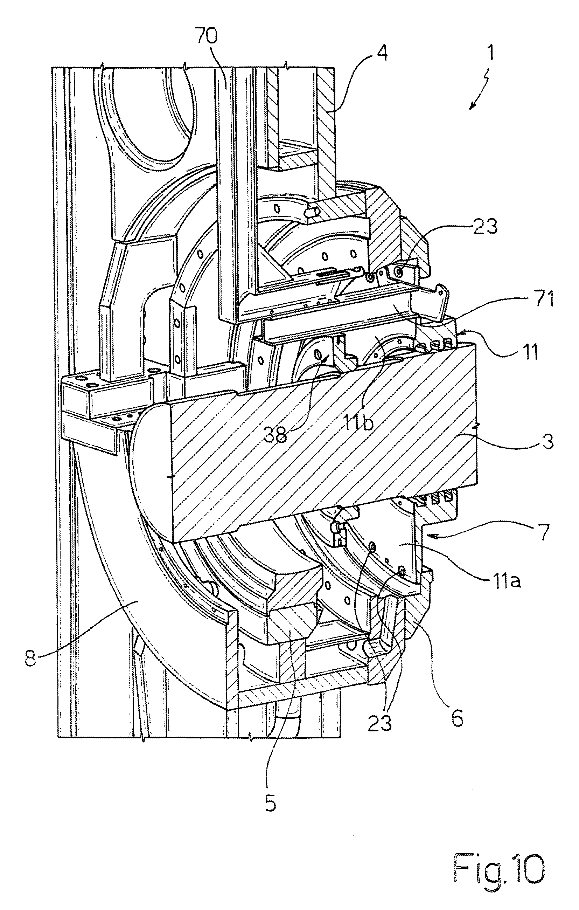

Subsequently, the complex formed by sector 11a - half-ring 32 is rotated downwards, through rotation of equipped ring 38 on shaft 3, then attachment of sector 11a of sealing element 11 to shield 6 via holes 23, disassembly and removal of spacer half-ring 32 and assembly of a second sector 11b (figure 10) of sealing element 11 against shield 6 and on first sector 11a, again using holes 23, are carried out; the assembly of second sector 11b is made passing over shaft 3 and equipped ring 38 by C-shaped lifting arm 70 and extension 71.

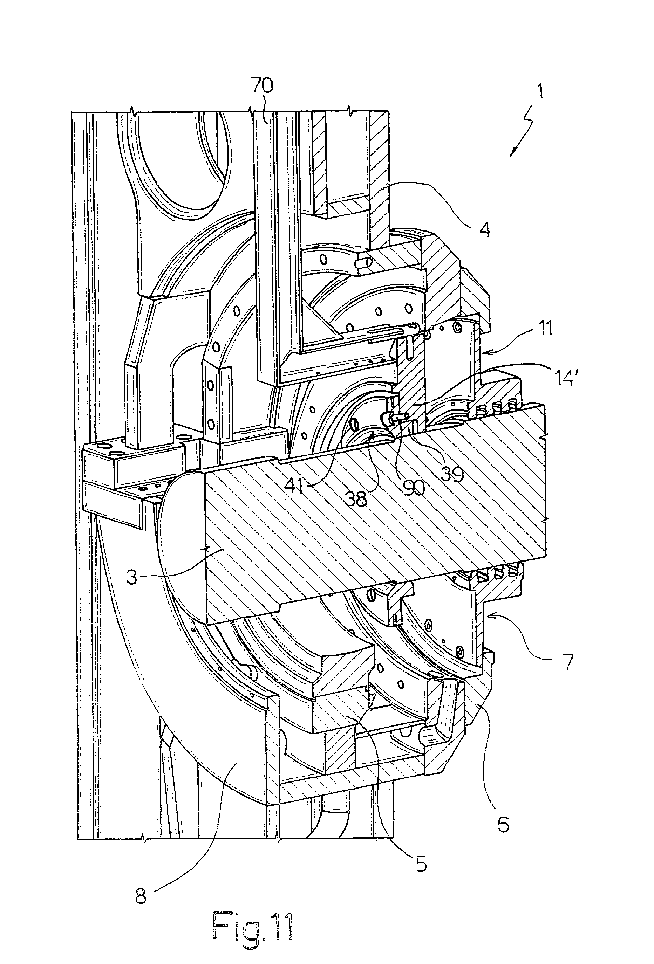

With reference to figure 11, a first sector 14' of seal box 13, namely of rear element 14 of box 13, is then assembled, by passing over shaft 3 and equipped ring 38 by C-shaped lifting arm 70, resting on sleeve portion 39 of equipped ring 38, with subsequent attachment of sector 14' to equipped ring 38, via screws 90, inserted into holes 41 of flange portion 40 and 20 on the front of rear element 14 of seal box 13, designed for attachment in use (via screws 19) of closing ring 15.

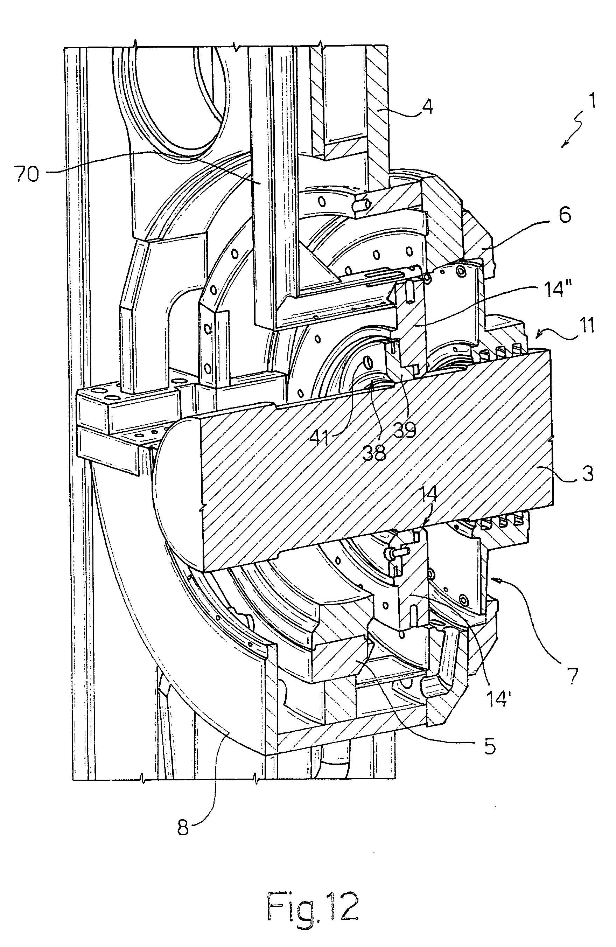

C-shaped lifting arm 70 is then removed, followed by rotation downwards of sector 14', by rotating the assembly support or equipped ring 38 on shaft 3 and then proceeding (figure 12) with assembly of a second sector 14" of seal box 13 (in the case in question solely of rear element 14 thereof), again by passing over shaft 3 and equipped ring 38 by means of C-shaped lifting arm 70; sector 14" thereby rests on sleeve portion 39 of equipped ring 38, where second sector 14" is then attached to equipped ring 38 itself and to first sector 14', to form rear element 14 of seal box 13, with subsequent removal of C-shaped lifting arm 70.

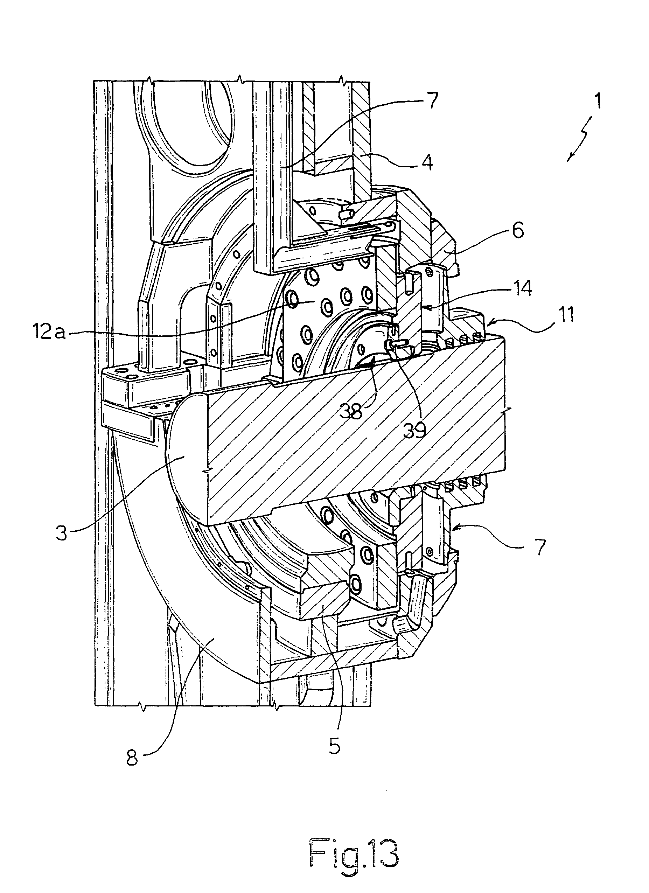

The next step (figure 13) is assembly and attachment against seal box 13, or, in the case described, against rear element 14 itself, of a first sector 12a of intermediate ring 12, by passing over shaft 3 and equipped ring 38 with C-shaped lifting arm 70, which supports rear element 14, formed by joining sectors 14' and 14". Holes 21 are used for attachment.

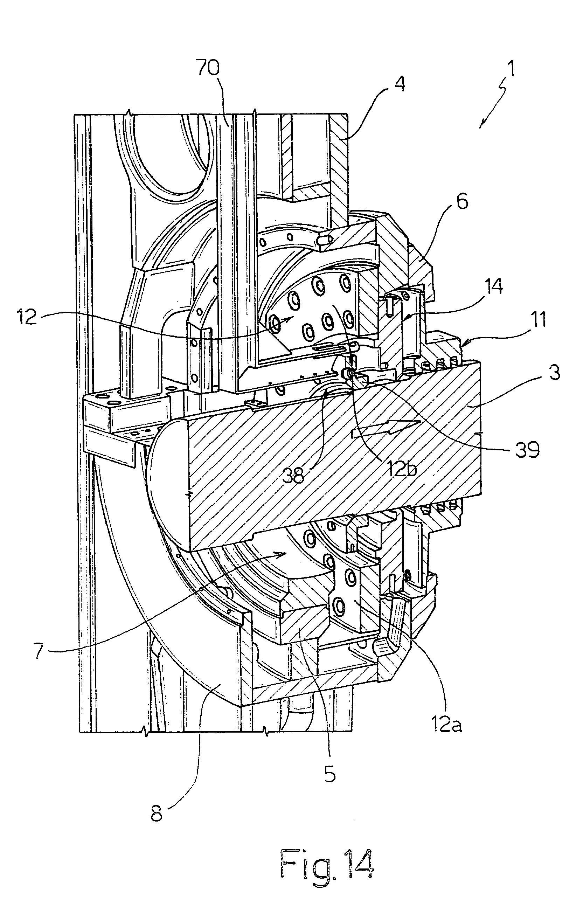

This is followed by rotation downwards of first sector 12a of intermediate ring 12, by rotation on shaft 3 of the complex formed by equipped ring 38 - seal box 13 (rear element 14 thereof), following removal of C-shaped lifting arm 70 and (figure 14) assembly and attachment against seal box 13 (or its rear element 14) and on first sector 12a of intermediate ring 12 of a second sector 12b of intermediate ring 12, again by passing over shaft 3 and equipped ring 38 with C-shaped lifting arm 70.

At this point, the last phase of the assembly method of the invention involves axial translation (in the direction of the arrow, figure 14) of intermediate ring 12 assembled in this manner, until it strikes against shield 6, and attachment of intermediate ring 12 to shield 6, via holes 22, through axial translation (sliding) on shaft 3 of the complex formed by assembly of equipped ring 38, seal box 13 (or rather rear element 14 thereof) and intermediate ring 12.

The last step is disassembly and removal of the assembly support or equipped ring 38, after dividing it once again into half-rings 30 and 31, using C-shaped lifting arm 70.

On the basis of what is described, it is clear that the value of eccentricity E of the curving centres of circumferences 46 of flange portion 40 of equipped ring 38 is determined as a function of the extent of the maximum raising to be carried out using C-shaped lifting arm 70 through passage 7, during the assembly phases described for passing over shaft 3 and equipped ring 38 with the various sectors forming the elements of sealing system 10.

Seal box 13, according to the example described, is assembled as the final operation, assembling sealing rings 16 and closing ring 15, which need not necessarily be divided into angular sectors and be assembled after reassembly of bearing 5. It is therefore clear that seal box 13 could, according to a possible variant, be preassembled and divided entirely into sectors, then assembled in the manner described for its rear element 14.

## Claims

1. Assembly device(33), particularly device for the assembly of a sealing system (1.0), on an internal supporting element (6) of the casing (4) of a rotary machine (1) cooled with a gaseous medium, between the casing and a shaft of the rotary machine, the sealing system (10) including a first sealing element (11) striking during use against the internal supporting element (6) and towards an internal side of the casing (4), an intermediate ring (12) connected during use with the internal supporting element (6), but positioned towards an external side of the casing (4) and a seal box (13) for the gaseous medium, supported by the intermediate ring (12) and positioned during use radially within the internal supporting element (6); **characterised in that** the assembly device (33) includes:
- a first and a second half-ring (30, 31), which may be coupled together circumferentially to form a ring-shaped assembly support (38), with a sleeve portion (39) which may be coupled to slide with the shaft (3) and a flange portion (40) which may be coupled with a rear element (14) of the seal box (13);
and
- a spacer half-ring (32), which has a first end (50) with an internal diameter greater than the diameter of the shaft (3) and a collar (51) for coaxial coupling with the first sealing element (11), and a second end (52) equipped with a flange (53) which may be coupled in contact with said sleeve portion (39) of the assembly support (38).

2. Device (33) according to claim 1, **characterised in that** each said half-ring (30, 31) defines a ring-shaped sector of basically 180°.

3. Device (33) according to claim 1 or 2, **characterised in that** said spacer half-ring (32) is formed of two sectors of a ring-shaped crown (54, 55), coupled coaxially and integral with each other via a set of longitudinal ribs (56); a first ring-shaped crown sector (54) having an L-shaped radial cross-section, so that its radially internal edge defines said collar (51) for coupling with the first sealing element (11); and a second ring-shaped crown sector (55) having a rectangular radial cross-section and defining said flange (53).

4. Device (33) according to claim 3, **characterised in that** said first sector of the ring-shaped crown (54) is equipped in a crown arrangement with a set of through holes (60) turned in the axial direction and which may be coupled during use with respective assembly holes (34, 35,) expressly on the front, with a side turned towards said seal box (13), on said first sealing element (12).

5. Device (33) according to any one of the above claims, **characterised in that** said first and second half-rings (30, 31) are equipped, on said flange portion (40) of the assembly support (38) defined by their coupling, with respective through holes (41) turned in an axial direction and positioned in a crown arrangement around a circumference with a radius which allows them to be coupled with respective front holes (20) on said rear element (14) of the seal box (13), intended to receive attachment screws (19) for a closing ring (15) of the seal box (13).

6. Device (33) according to claim 5, **characterised in that** said sleeve portion (39) of the assembly support (38) defined by coupling of said first and second half-rings (30, 31) has an internal diameter which is basically equal to the external diameter of the shaft (3) and an external diameter basically equal to the internal diameter of said flange (53) of the second end (52) of the spacer half-ring (32).

7. Device (33) according to claim 6, **characterised in that** said flange portion (40) of the assembly support (38) defined by coupling of said first and second half-rings (30, 31) has an oblong radially external profile, defined by opposing circumferences with a radius basically identical to the internal diameter of an internal space of said rear element (14) of the seal box (13), intended during use to receive the respective sealing rings (16) sliding with said shaft (3) and to that of a cylinder-shaped lateral surface of said internal space of the rear element (14) of the seal box (13), the curving centre of which is translated radially outwards, compared with a shaft (3) of symmetry of the half-rings (30, 31), with a pre-set eccentricity (E).

8. Device (33) according to claim 7, **characterised in that** said first and second half-rings (30, 31) are equipped, radially on the inside, with respective sectors (36) coupled to slide with said shaft (3), in friction-proof material.

9. Method for the assembly of a sealing system (10), on an internal supporting element (6) of the casing (4) of a rotary machine (1) cooled with a gaseous medium, between the casing (4) and an shaft (3) of the rotary machine (1), said system (10) including a range of components arranged according to a pre-set sequence inside the casing (4); in which each component of said sealing system is divided into at least two sectors of pre-set angular extension and assembly of which is performed in sequence, with insertion of a first sector of each component inside said casing, by passing over said shaft (3) with a C-shaped lifting arm (70), possibly with an extension (71), rotation of the first sector of the component just inserted downwards and insertion of at least a second sector of the same component via said C-shaped lifting arm (70); **characterised by** comprising the following stages:
a) head to head assembly against a front side of a first sector of a first sealing element, striking during use against the internal supporting element (6) and towards an internal side of the casing (4), of a spacer half-ring (32);
b) assembly on said shaft (3), by passing over it with a C-shaped lifting arm (70), of a first half-ring (30, 31), rotation of the first half-ring downwards using the shaft (3) as a guide, assembly resting on said shaft (3), by passing over it with the C-shaped lifting arm (70), of a second half-ring (30, 31), and circumferential attachment of the first and second half-rings (30, 31) to each other, to form a ring-shaped assembly support (38) carried by the shaft (3);
c) assembly on a sleeve portion (39) of said ring-shaped assembly support (38 of the complex formed by the first sector of the first sealing element (11) and the spacer half-ring (32), by passing over the shaft (3) and the assembly support (38) carried by the shaft (3) with the C-shaped lifting arm (70);
d) rotation downwards of the complex formed by the first sector of the first sealing element (11) and the spacer half-ring (32), attachment of the first sector of the first sealing element (11) to said internal supporting element (6) of the casing (4), disassembly and removal of the spacer half-ring (32);
e) assembly of a second sector of the first sealing element (11), by passing over the shaft (6) and the assembly support (38) carried by the shaft (3) with the C-shaped lifting arm (70), against said internal supporting element (6) of the casing (4) and on said first sector of the first sealing element (11);
f) assembly of a first sector of a seal box (13) for the gaseous medium, arranged radially during use inside an internal supporting element (6), or of its one rear element (14), by passing over the shaft (3) and the assembly support (38) carried by the shaft (3) with the C-shaped lifting arm (70), resting on said sleeve portion (39) of the assembly support (38);
g) attachment of said first sector of the seal box (13) or of its one rear element (14) on the assembly support (38), removal of the C-shaped lifting arm (70) and rotation downwards of said first sector of the seal box (13), by rotating the assembly support (38) on the shaft (3);
h) assembly of a second sector of the seal box (13) or of its one rear element (14), by passing over the shaft (3) and the assembly support (38) carried by the shaft (3) with the C-shaped lifting arm (70), resting on said sleeve portion (39) of the assembly support (38), attachment of a second sector of the seal box (13) or of its one rear element (14) to the assembly support (38) and to the first sector of the seal box (13) or of its one rear element (14) and removal of the C-shaped lifting arm (70);
i) assembly and attachment against the seal box (13) or of its one rear element (14) of a first sector of an intermediate ring (12), connected during use with said internal supporting element (6), but arranged towards an external side of the casing (4) and supporting said seal box (13), by passing over the shaft (3) and the assembly support (38) carried by the shaft (3) with the C-shaped lifting arm (70);
j) rotation downwards of the first sector of the intermediate ring (12), via rotation on the shaft (3) of the complex formed by the assembly support (38) and seal box (13) or of its one rear element (14), following removal of the C-shaped lifting arm (70);
k) assembly and attachment against the seal box (13) or its one rear element (14) and on said first sector of the intermediate ring (12) of a second sector of the intermediate ring (12), by passing over the shaft (3) and the assembly support (38) carried by the shaft (3) with the C-shaped lifting arm (70);
l) axial translation of the intermediate ring (12) until it strikes against said internal supporting element (6) of the casing (4) and attachment of the intermediate ring (12) to the latter, via axial translation resting on the shaft (3) of the complex formed by the assembly support (38) and seal box (13) or its one rear element (14) and the intermediate ring (12);
m) disassembly and removal of the assembly support (38), following dividing of the same into said first and second half-rings (30, 31), using C-shaped lifting arm (70).

10. Sealing system (10) for a rotary machine (1) cooled with a gaseous medium, in particular an alternator, which may be placed between a casing (4) and a shaft of the rotary machine (1), to confine said gaseous cooling medium inside the casing (4), with the sealing system (10) including a first sealing element (11) striking during use against an internal supporting element (6) of the casing (4) and arranged towards an internal side of the casing (4), an intermediate ring (12) connected during use with the internal supporting element (6) but arranged towards an external side of the casing (4) and a seal box (13) for the gaseous medium supported by an intermediate ring (12) and arranged radially during use within an internal supporting element (6); **characterised in that** at least said intermediate ring (12) and seal box (13) are sized in a manner to achieve, inside said casing (4), relatively high pressures for said gaseous cooling medium, equal to at least 6 bar of absolute pressure; and **in that** said first sealing element (11), intermediate ring (12) and seal box (13) are produced in a manner to be selectively coupled to said half-rings (30, 31) of the assembly device (33), according to any of claims 1 to 8.

## Patentansprüche

1. Verbindungsvorrichtung (33), insbesondere eine Vorrichtung zur Verbindung eines Dichtungssystems (10), an einem inneren Stützelement (6) des Gehäuses (4) einer Rotationsmaschine (1), die mit einem gasförmigen Medium gekühlt wird, zwischen dem Gehäuse und einer Welle der Rotationsmaschine, wobei das Dichtungssystem (10) ein erstes Dichtelement (11) aufweist, das während des Gebrauchs an das innere Stützelement (6) stößt und in Richtung einer inneren Seite des Gehäuses (4), einen Zwischenring (12), der während des Gebrauchs mit dem inneren Stützelement (6) verbunden ist, jedoch in Richtung einer äußeren Seite des Gehäuses (4) und eines Dichtungsbehälters (13) für das gasförmige Medium positioniert ist, gestützt durch den Zwischenring (12) und während des Gebrauchs radial innerhalb des inneren Stützelements (6) positioniert ist; **dadurch gekennzeichnet, dass** die Verbindungsvorrichtung (33) aufweist:
- einen ersten und einen zweiten Halbring (30, 31), welche umlaufend miteinander verbunden werden können, um eine ringförmige Verbindungshalterung (38) zu bilden, mit einem Muffenbereich (39), der gekoppelt ist, um mit einer Welle (3) zu gleiten, und einem Flanschbereich (40), der mit einem Rückelement (14) des Dichtungsbehälters (13) gekoppelt sein kann; und
- einen Abstandshalbring (32), welcher ein erstes Ende (50) mit einem inneren Durchmesser aufweist, der größer als der Durchmessers der Welle (3) ist, und einen Kragen (51) zum koaxialen Koppeln mit dem ersten Dichtelement (11), und ein zweites Ende (52), das mit einem Flansch (53) ausgestattet ist, der in Kontakt mit dem Muffenbereich (39) der Verbindungshalterung (38) gekoppelt werden kann.

2. Vorrichtung (33) nach Anspruch 1, **dadurch gekennzeichnet, dass** jeder Halbring (30, 31) einen ringförmigen Abschnitt von im Wesentlichen 180° definiert.

3. Vorrichtung (33) nach Anspruch 1 oder 2, **dadurch gekennzeichnet, dass** der Abstandshalbring (32) aus zwei Abschnitten eines ringförmigen Kranzes (54, 55) gebildet wird, wobei sie koaxial und integral miteinander über einen Satz longitudinaler Rippen (56) verbunden sind; wobei ein erster ringförmiger Kranzabschnitt (54) eine L-förmigen Radialquerschnitt hat, so dass seine innere radiale Kante den Kragen (51) zum Koppeln mit dem ersten Dichtelement (11) definiert; und wobei ein zweiter ringförmiger Kranzabschnitt (55) einen rechtwinkligen Radialquerschnitt hat und den Flansch (53) definiert.

4. Vorrichtung (33) nach Anspruch 3, **dadurch gekennzeichnet, dass** der erste Abschnitt des ringförmigen Kranzes (54) in einer Kranzanordnung mit einem Satz Durchgangsbohrungen (60) ausgestattet ist, die in axialer Richtung liegen, und welche während des Gebrauchs mit entsprechenden Verbindungslöchern (34, 35) an der Vorderseite an dem ersten Dichtelement (11) gekoppelt werden können, wobei eine Seite in Richtung des Dichtungsbehälters (13) liegt.

5. Vorrichtung (33) nach einem der vorhergehenden Ansprüche, **dadurch gekennzeichnet, dass** der erste und zweite Halbring (30, 31) an dem Flanschbereich (40) der Verbindungshalterung (38), die durch ihre Kopplung definiert ist, mit entsprechenden Durchgangsbohrungen (41) ausgestattet werden können, die in einer axialen Richtung liegen, und in einer Kranzanordnung um eine Umrandung positioniert sind mit einem Radius, der es ihnen erlaubt mit entsprechenden Vorderseitenlöchern (20) an dem Rückelement (14) des Dichtungsbehälters (13) gekoppelt zu werden, die dafür vorgesehen sind, Befestigungsschrauben (19) für einen Abschlussring (15) des Dichtungsbehälters (13) aufzunehmen.

6. Vorrichtung (33) nach Anspruch 5, **dadurch gekennzeichnet, dass** der Muffenbereich (39) der Verbindungshalterung (38), die durch die Kopplung des ersten und zweiten Halbrings (30, 31) definiert ist, einen inneren Durchmesser hat, der im Wesentlichen gleich dem äußeren Durchmessers der Welle (3) ist und einen äußeren Durchmesser, der im Wesentlichen gleich dem inneren Durchmesser des Flansches (53) des zweiten Endes (52) des Abstandshalbrings (32) ist.

7. Vorrichtung (33) nach Anspruch 6, **dadurch gekennzeichnet, dass** der Flanschbereich (40) der Verbindungshalterung (38), die durch die Kopplung des ersten und zweiten Halbrings (30, 31) definiert ist, ein längliches, radiales externes Profil hat, das durch gegenüberliegende Umrandungen definiert ist, mit einem Radius, der im Wesentlichen dem inneren Durchmesser eines inneren Raumes des Rückelements (14) des Dichtungsbehälters (13) entspricht, wobei es vorgesehen ist, während des Gebrauchs die entsprechenden Dichtringe (16), die an der Welle gleiten (3), aufzunehmen, und dem einer zylinderförmigen lateralen Oberfläche des inneren Raumes des Rückelements (14) des Dichtungsbehälters (13), wobei die Krümmungsmitte von diesen radial nach außen mit einer vorgegebenen Exzentrizität (E) versetzt ist, verglichen mit einer Symmetrieachse der Halbringe (30, 31).

8. Vorrichtung (33) nach Anspruch 7, **dadurch gekennzeichnet, dass** der erste und zweite Halbring (30, 31) radial an der Innenseite mit entsprechenden Abschnitten (36), die gekoppelt sind, um an der Welle (3) zu gleiten, aus einem reibungsbeständigen Material ausgestattet sind.

9. Verfahren zur Verbindung eines Dichtungssystem (10), an einem inneren Stützelement (6) des Gehäuses (4) einer Rotationsmaschine (1), die mit einem gasförmigen Medium gekühlt wird, zwischen dem Gehäuse (4) und einer Welle (3) der Rotationsmaschine (1), wobei das System (10) eine Anzahl Komponenten aufweist, die gemäß einer vorgegebenen Abfolge innerhalb des Gehäuses (4) angeordnet sind; bei welchem jede Komponente des Dichtungssystems in wenigstens zwei Abschnitten eines vorgegebenen winkeligen Ausbaus eingeteilt ist und die Verbindung von diesen in einer Abfolge ausgeführt wird, mit Einführung eines ersten Abschnitts jeder Komponente innerhalb des Gehäuses, durch Weiterführen der Welle (3) mit einem C-förmigen Hebearm (70), unter Umständen mit einer Erweiterung (71), Drehen des ersten Abschnitts der Komponente, die gerade nach unten eingeführt ist, und Einführen wenigstens eines zweiten Abschnitts derselben Komponente über den C-förmigen Hebearm (70), **dadurch gekennzeichnet, dass** es die folgenden Zustände umfasst:
a) Kopf-an-Kopf Verbindung an einer Vorderseite eines ersten Abschnitts eines ersten Dichtelements eines Abstandshalbrings (32), das an das innere Stützelement (6) während des Gebrauchs und in Richtung einer inneren Seite des Gehäuses (4) stößt;
b) Verbinden an der Welle (3), durch Weiterführen von ihr mit einem C-förmigen Hebearm (70), eines ersten Halbrings (30, 31), Abwärtsdrehen des ersten Halbrings unter Verwendung der Welle (3) als eine Führung, Verbinden, ruhend an der Welle (39), durch Weiterführen von ihr mit dem C-förmigen Hebearm (70), eines zweiten Halbrings (30, 31), und umlaufende Befestigung des ersten und zweiten Halbrings (30, 31) miteinander, um eine ringförmige Verbindungshalterung (38), die durch die Welle (3) getragen wird, zu bilden;
c) Verbinden an einem Muffenbereich (39) der ringförmigen Verbindungshalterung (38) des Komplexes, der durch den ersten Abschnitt des ersten Dichtelements (11) und den Abstandshalbring (32) gebildet wird, durch Weiterführen der Welle (3) und der Verbindungshalterung (38), die durch die Welle (3) getragen wird, mit dem C-förmigen Hebearm (70);
d) Abwärtsdrehung des Komplexes, der durch den ersten Abschnitt des ersten Dichtelements (11) und den Abstandshalbring (32) gebildet wird, Befestigen des ersten Abschnitts des ersten Dichtelements (11) an dem inneren Stützelement (6) des Gehäuses (4), Demontage und Entfernen des Abstandshalbrings (32);
e) Verbinden eines zweiten Abschnitts des ersten Dichtelements (11), durch Weiterführen der Welle (6) und der Verbindungshalterung (38), die durch die Welle (3) getragen wird, mit dem C-förmigen Hebearm (70), an dem inneren Stützelement (6) des Gehäuses (4) und an dem ersten Abschnitt des ersten Dichtelements (11);
f) Verbinden eines ersten Abschnitts eines Dichtungsbehälters (13) für das gasförmige Medium, der während des Gebrauchs radial innerhalb eines inneren Stützelements (6) angeordnet ist, oder seines einen Rückelements (14), durch Weiterführen der Welle (3) und der Verbindungshalterung (38), die durch die Welle (3) getragen wird, mit dem C-förmigen Hebearm (70), liegend an dem Flanschbereich (39) der Verbindungshalterung (38);
g) Befestigen des ersten Abschnitts des Dichtungsbehälters (13) oder seines einen Rückelements (14) an der Verbindungshalterung (38), Entfernen des C-förmigen Hebearms (70) und Abwärtsdrehung des ersten Abschnitts des Dichtungsbehälters (13) durch Drehen der Verbindungshalterung (38) an der Welle (3);
h) Verbinden eines zweiten Abschnitts des Dichtungsbehälters (13) oder seines einen Rückelements (14) durch Weiterführen der Welle (3) und der Verbindungshalterung (38), die durch die Welle (3) getragen wird, mit dem C-förmigen Hebearm (70), liegend an dem zweiten Flanschbereich (39) der Verbindungshalterung (38), Befestigung eines zweiten Abschnitts des Dichtungsbehälters (13) oder seines einen Rückelements (14) an der Verbindungshalterung (38) und mit dem ersten Abschnitt des Dichtungsbehälters (13) oder seines einen Rückelements (14) und Entfernen des C-förmigen Hebearms (70);
i) Verbinden und Befestigen an dem Dichtungsbehälter (13) oder seines einen Rückelements (14) eines ersten Abschnitts eines Zwischenrings (12), der während des Gebrauchs mit dem inneren Stützelement (6) verbunden ist, jedoch in Richtung einer äußeren Seite des Gehäuses (4) angeordnet und den Dichtungsbehälter (13) unterstützend, durch Weiterführen der Welle (3) und der Verbindungshalterung (38), die durch den Welle (3) getragen wird, mit dem C-förmigen Hebearm (70);
j) Abwärtsdrehung des ersten Abschnitts des Zwischenrings (12) durch Drehen an der Welle (3) des Komplexes, der durch die Verbindungshalterung (38) und den Dichtungsbehälter (13) oder seines einen Rückelements (14) gebildet wird, nach dem Entfernen des C-förmigen Hebearms (70);
k) Verbinden und Befestigen an dem Dichtungsbehälter (13) oder seines einen Rückelements (14) und an dem ersten Abschnitt des Zwischenrings (12) eines zweiten Abschnitts des Zwischenrings (12), durch Weiterführen der Welle (3) und der Verbindungshalterung (38), die durch die Welle (3) getragen wird, mit dem C-förmigen Hebearm (70);
l) axiales Versetzen des Zwischenrings (12) bis er an das innere Stützelement (6) des Gehäuses (4) stößt und Befestigen des Zwischenrings (12) an dem letzteren, über axiales Versetzen liegend an der Welle (3) des Komplexes, der durch die Verbindungshalterung (38) und den Dichtungsbehälter (13) oder seines einen Rückelements (14) und dem Zwischenring (12) gebildet wird;
m) Demontage und Entfernen der Verbindungshalterung (38), nach Aufteilen derselben in einen ersten und zweiten Halbring (30, 31) unter Verwendung des Hebearms (70).

10. Dichtungssystem (10) für eine Rotationsmaschine (1), die mit einem gasförmigen Medium gekühlt wird, insbesondere einen Generator, welches zwischen einem Gehäuse (4) und einer Welle der Rotationsmaschine (1) plaziert sein kann, um das gasförmige Kühlmedium innerhalb des Gehäuses (4) einzuschließen, wobei das Dichtungssystem (10) ein erstes Dichtelement (11) aufweist, das während des Gebrauchs an ein inneres Stützelement (6) des Gehäuses (4) stößt, und in Richtung einer inneren Seite des Gehäuse (4) angeordnet ist, einen Zwischenring (12), der während des Gebrauchs mit dem inneren Stützelement (6) verbunden ist, jedoch in Richtung einer äußeren Seite des Gehäuses (4) angeordnet, und einen Dichtungsbehälter (13) für das gasförmige Medium, der durch einen Zwischenring (12) gestützt wird und radial während des Gebrauchs innerhalb eines inneren Stützelements (6) angeordnet ist; **dadurch gekennzeichnet, dass** wenigstens der Zwischenring (12) und der Dichtungsbehälter (13) auf eine Art und Weise dimensioniert sind, um innerhalb des Gehäuses (4) relativ hohe Drücke für das gasförmige Kühlmedium zu erreichen, der wenigstens gleich 6 Bar absoluter Druck ist; und, dass das erste Dichtelement (11), der Zwischenring (12) und der Dichtungsbehälter (13) auf eine Art und Weise hergestellt werden, um wahlweise mit den Halbringen (30, 31) der Verbindungsvorrichtung (33) nach einem der Ansprüche 1 bis 8 verbunden zu werden.

## Revendications

1. Dispositif d'assemblage (33), en particulier un dispositif pour l'assemblage d'un système d'étanchéité (10), sur un élément de support interne (6) du boîtier (4) d'une machine rotative (1) refroidie avec un moyen gazeux, entre le boîtier et un arbre de la machine rotative, le système d'étanchéité (10) comprenant un premier élément d'étanchéité (11) frappant pendant l'utilisation contre l'élément de support interne (6) et vers un côté intérieur du boîtier (4), un collier intermédiaire (12) connectée pendant l'utilisation avec l'élément de support interne (6), mais positionné vers un côté externe du boîtier (4) et une boîte étanche (13) pour le milieu gazeux, supporté par le collier intermédiaire (12) et positionné de façon radiale pendant l'utilisation dans l'élément de support interne (6) ; **caractérisé en ce que** le dispositif d'assemblage (33) comprend :
- un premier et un deuxième demi collier (30, 31), qui peuvent être couplés ensemble de façon circonférentielle pour former un support d'assemblage en forme de collier (38), avec une partie de manchon (39) qui peut être couplée pour coulisser avec l'arbre (3) et une partie de flasque (40) qui peut être couplée avec un élément arrière (14) de la boîte étanche (13) ;
et
- un demi collier entretoise (32), qui a une première extrémité (50) avec un diamètre interne plus grand que le diamètre de l'arbre (3) et un collier (51) pour un couplage coaxial avec le premier élément d'étanchéité (11), et une deuxième extrémité (52) équipée d'une flasque (53) qui peut être couplée en contact avec ladite partie de manchon (39) du support d'assemblage (38).

2. Dispositif (33) selon la revendication 1, **caractérisé en ce que** chacune desdites moitiés de collier (30, 31) définit un secteur en forme de collier de 180° pratiquement.

3. Dispositif (33) selon la revendication 1 ou 2, **caractérisé en ce que** ledit demi collier entretoise (32) est formé de deux secteurs d'une couronne en forme de collier (54, 55), couplés de façon coaxiale et intégrale l'un avec l'autre via un ensemble de nervures longitudinales (56) ; d'un premier secteur de couronne en forme de collier (54) ayant une section transversale radiale en forme de L, de façon que son bord interne radialement définisse ledit collier (51) pour se coupler avec le premier élément d'étanchéité (11) ; et d'un deuxième secteur de couronne en forme de collier (55) ayant une section transversale radiale rectangulaire et définissant ladite flasque (53).

4. Dispositif (33) selon la revendication 3, **caractérisé en ce que** ledit premier secteur de la couronne en forme de collier (54) est équipé dans un arrangement de couronne avec un ensemble de trous traversants (60) tournés dans la direction axiale et qui peuvent être couplés pendant l'utilisation avec les trous d'assemblage respectifs (34, 35) expressément sur l'avant, avec un côté tourné vers ladite boîte étanche (13), sur ledit premier élément d'étanchéité (11).

5. Dispositif (33) selon l'une quelconque des revendications ci-dessus, **caractérisé en ce que** lesdits premier et deuxième demi colliers (30, 31) sont équipés, sur ladite partie de flasque (40) du support d'assemblage (38) définie par leur couplage, de trous traversants respectifs (41) tournés dans une direction axiale et positionnés dans un arrangement de couronne autour d'une circonférence avec un rayon qui leur permet d'être couplés avec les trous avant respectifs (20) sur ledit élément arrière (14) de la boîte étanche (13), destinée à recevoir des vis de fixation (19 pour un collier de fermeture (15) de la boîte étanche (13).

6. Dispositif (33) selon la revendication 5, **caractérisé en ce que** ladite partie de manchon (39) du support d'assemblage (38) définie au moyen du couplage desdits premier et deuxième demi colliers (30, 31) a un diamètre interne qui est de façon basique égal au diamètre externe de l'arbre (3) et un diamètre externe qui est de façon basique égal au diamètre interne de ladite flasque (53) de la deuxième extrémité (52) du demi collier entretoise (32).

7. Dispositif (33) selon la revendication 6, **caractérisé en ce que** ladite partie de flasque (40) du support d'assemblage (38) définie au moyen du couplage desdites première et deuxième parties de demi colliers (30, 31) a un profil externe radialement oblong, défini au moyen de circonférences opposées avec un rayon pratiquement identique au diamètre interne d'un espace interne dudit élément arrière (14) de la boîte étanche (13), destinée à recevoir pendant l'utilisation les colliers d'étanchéité respectifs (16) coulissant avec ledit arbre (3) et celle d'une surface latérale en forme de cylindre dudit espace interne de l'élément arrière (14) de la boîte étanche (13), le centre de courbure duquel est translaté radialement vers l'extérieur, comparé à un arbre (3) de symétrie des moitiés de colliers (30, 31), d' excentricité préréglée E.

8. Dispositif (33) selon la revendication 7, **caractérisé en ce que** lesdites première et deuxième moitiés de colliers (30, 31) sont équipées, radialement sur l'intérieur, de secteurs respectifs (36) couplés pour coulisser avec ledit arbre (3), en matériau anti-frottement.

9. Procédé pour l'assemblage d'un système d'étanchéité (10), sur un élément de support interne (6) du boîtier (4) d'une machine rotative (1) refroidie avec un milieu gazeux, entre le boîtier (4) et un arbre (3) de la machine rotative (1), ledit système 10 comprenant une gamme de composants disposés en accord avec une séquence préréglée à l'intérieur du boîtier (4) ; dans lequel chaque composant dudit système d'étanchéité est divisé en au moins deux secteurs d'extension angulaire préréglée et dont l'assemblage desquels est réalisé en séquence, avec l'insertion d'un premier secteur de chaque composant à l'intérieur dudit boîtier, en passant sur ledit arbre (3) avec un bras de levage en forme de C (70), de façon possible avec une extension (71), la rotation du premier secteur du composant juste inséré vers le bas et l'insertion d'au moins un deuxième secteur du même composant via ledit bras de levage en forme de C (70) ; **caractérisé en** comprenant les stades suivants :
a) assemblage tête-à-tête contre un côté avant d'un premier secteur d'un premier élément d'étanchéité, cognant pendant l'utilisation contre l'élément de support interne (6) et vers un côté interne du boîtier (4), d'un demi collier entretoise (32) ;
b) assemblage sur ledit arbre (3), en passant sur celui-ci avec un bras de levage en forme de C (70), d'un premier demi-collier (30, 31), la rotation du premier demi collier vers le bas en utilisant l'arbre (3) comme guide, l'assemblage restant sur ledit arbre (3), en passant sur celui-ci avec le bras de levage en forme de C (70), d'un deuxième demi collier (30, 31), et d'une fixation circonférentielle du premier et du deuxième demi colliers (30, 31) l'un à l'autre, pour former un support d'assemblage en forme de collier (38) porté au moyen de l'arbre (3) ;
c) assemblage sur une partie de manchon (39) dudit support d'assemblage en forme de collier (38) du complexe formé par le premier secteur du premier élément d'étanchéité (11) et du demi collier entretoise (32), en passant sur l'arbre (3) et le support d'assemblage (38) porté au moyen de l'arbre (3) avec le bras de levage en forme de C (70) ;
d) rotation vers le bas du complexe formé par le premier secteur du premier élément d'étanchéité (11) et le demi collier entretoise (32), la fixation du premier secteur du premier élément d'étanchéité (11) audit élément de support interne (6) du boîtier (4), le désassemblage et le retrait du demi collier entretoise (32) ;
e) assemblage d'un deuxième secteur du premier élément d'étanchéité (11), en passant sur l'arbre (6) et le support d'assemblage (38) porté au moyen de l'arbre (3) avec le bras de levage en forme de C (70), contre ledit élément de support interne (6) du boîtier (4) et sur ledit premier secteur du premier élément d'étanchéité (11) ;
f) assemblage d'un premier secteur d'une boîte d'étanchéité (13) pour le milieu gazeux, disposé de façon radiale pendant l'utilisation à l'intérieur d'un élément de support interne (6), ou de son un élément arrière (14), en passant sur l'arbre (3) et le support d'assemblage (38) porté au moyen de l'arbre (3) avec le bras de levage en forme de C (70), reposant sur ladite partie de manchon (39) du support d'assemblage (38) ;
g) fixation dudit premier secteur de la boite étanche (13) ou de son un élément arrière (14) sur le support d'assemblage (38), retrait du bras de levage en forme de C (70) et rotation vers le bas dudit premier secteur de la boîte étanche (13), au moyen de la rotation du support d'assemblage (38) sur l'arbre (3) ;
h) assemblage d'un deuxième secteur de la boîte étanche (13) ou de son un élément arrière (14), en passant sur l'arbre (3) et e support d'assemblage (38) porté au moyen de l'arbre (3) avec le bras de levage en forme de C (70), reposant sur ladite partie de manchon (39) du support d'assemblage (38), fixation d'un deuxième secteur de la boîte étanche (13) ou de son un élément arrière (14) au support d'assemblage (38) et au premier secteur de la boîte étanche (13) ou de son un élément arrière (14) et retrait du bras de levage en forme de C (70) ;
i) assemblage et fixation contre la boîte étanche (13) ou de son un élément arrière (14) d'un premier secteur d'un collier intermédiaire (12), connecté pendant l'utilisation avec ledit élément de support interne (6), mais disposé vers un côté externe du boîtier (4) et supportant ladite boîte étanche (13), en passant sur l'arbre (3) et le support d'assemblage (38) porté par l'arbre (3) avec le bras de levage en forme de C (70) ;
j) rotation vers le bas du premier secteur du collier intermédiaire (12), via la rotation sur l'arbre (3) du complexe formé par le support d'assemblage (38) et la boîte étanche (13) ou de son un élément arrière (14), à la suite du retrait du bras de levage en forme de C (70) ;
k) assemblage et fixation contre la boîte étanche (13) de son un élément arrière (14) et sur ledit premier secteur du collier intermédiaire (12) d'un deuxième secteur du collier intermédiaire (12), en passant sur l'arbre (3) et le support d'assemblage (38) porté au moyen de l'arbre (3) avec le bras de levage en forme de C (70) ;
l) translation axiale du collier intermédiaire (12) jusqu'à ce qu'il frappe contre ledit élément de support interne (6) du boîtier (4) et fixation du collier intermédiaire (12) à ce dernier, via une translation axiale reposant sur l'arbre (3) du complexe formé par le support d'assemblage (38) et la boîte étanche (13) ou son un élément arrière (14) et le collier intermédiaire (12) ;
m) désassemblage et retrait du support d'assemblage (38), à la suite de la séparation de celui-ci dans lesdits premier et deuxième moitiés de colliers (30, 31), en utilisant un bras de levage en forme de C (70).

10. Système d'étanchéité (10) pour une machine rotative (1) refroidie avec un milieu gazeux, en particulier un alternateur, qui peut être placé entre un boîtier (4) et un arbre de la machine rotative (1), pour enfermer ledit milieu de refroidissement gazeux à l'intérieur du boîtier (4), avec le système d'étanchéité (10) comprenant un premier élément d'étanchéité (11) frappant pendant l'utilisation contre un élément de support interne (6) du boîtier (4) et disposé vers un côté interne du boîtier (4), un collier intermédiaire (12) connecté pendant l'utilisation avec l'élément de support interne (6) mais disposé vers un côté externe du boîtier (4) et une boîte étanche (13) pour le milieu gazeux supportée au moyen d'un collier intermédiaire (12) et disposée de façon radiale pendant l'utilisation dans un élément de support interne (6) ; **caractérisé en ce que** au moins ledit collier intermédiaire (12) et la boîte étanche (13) sont dimensionnés de façon à réaliser, à l'intérieur dudit boîtier (4), des pressions relativement élevées pour ledit milieu de refroidissement gazeux, égales à au moins 6 bars de pression absolue ; et **en ce que** ledit premier élément d'étanchéité (11), le collier intermédiaire (12) et la boîte étanche (13) sont produits de façon à être couplés de façon sélective auxdites moitiés de colliers (30, 31) du dispositif d'assemblage (33), selon l'une quelconque des revendications 1 à 8.
